Europäisches Patentamt

European Patent Office

Office européen des brevets

(19)

(11) EP 0 841 787 A2

(12) EUROPEAN PATENT APPLICATION

(43) Date of publication:
13.05.1998 Bulletin 1998/20

(51) Int. Cl.$^6$: H04L 27/26

(21) Application number: 97118177.1

(22) Date of filing: 20.10.1997

(84) Designated Contracting States:
AT BE CH DE DK ES FI FR GB GR IE IT LI LU MC
NL PT SE
Designated Extension States:
AL LT LV RO SI

(30) Priority: 07.11.1996 JP 309909/96

(71) Applicant:
KABUSHIKI KAISHA KENWOOD
Shibuya-ku Tokyo (JP)

(72) Inventor: Okuhata, Yasuhide
Yokohama-shi, Kanagawa (JP)

(74) Representative:
Patentanwälte
Leinweber & Zimmermann
Rosental 7
80331 München (DE)

(54) **Synchronisation in a multicarrier receiver**

(57) A demodulator is provided which can suppress interference between symbols when a plurality of radio waves are received with a single antenna in an SFN environment or in a multipath environment. In the demodulator of a receiver for receiving an orthogonal frequency division multiplex modulated signal, a received signal is Fourier transformed by an FFT circuit 3, a PRS symbol is derived from an output of the FFT circuit, a cross power calculator 7 calculates from this derived PRS symbol a transfer function of a transmission path at the frequency point where a carrier is present, the calculated transfer function is inverse Fourier transformed by an IFFT circuit 8 to obtain an impulse response signal, the total of levels of the impulse response signal in a substantially and sequentially shifted time window generally equal to a guard interval period is calculated by an adder 12, a peak position is detected from an output of the adder 12 by a peak position detector 13, and the phase of a sampling signal of an A/D converter 1 is adjusted in accordance with the detected peak position to control the reception timing in such a manner that the peak position converges into a target position.

EP 0 841 787 A2

## Description

BACKGROUND OF THE INVENTION

1. Field of the Invention

The present invention relates to a demodulator of a receiver which uses orthogonal frequency division multiplex modulation such as in the case of digital-audio broadcasting.

2. Description of the Related Art

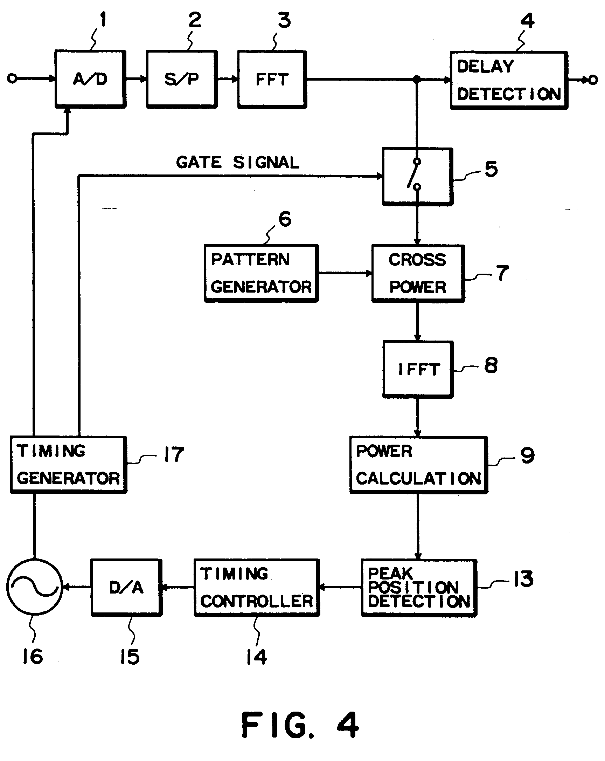

A conventional demodulator of this type is constructed as shown in Fig. 4, taking as an example a receiver for receiving radio waves of digital-audio broadcasting in conformity with European Broadcasting Union.

As shown in Fig. 4, a received intermediate frequency signal, which was orthogonal-frequency-division-multiplex modulated (hereinafter described as OFDM modulated where applicable), is supplied to an input terminal and A/D converted by an A/D converter 1. The A/D converted signal is converted into parallel data by a serial/parallel converter 2. This parallel data is supplied to a fast Fourier transformation circuit (hereinafter described as FFT circuit) 3 whereat it is Fourier transformed to be converted from signals in a time domain into signals in a frequency domain. An output of the FFT circuit 3 is delay-detected by a delay detector 4 and output as a demodulated signal.

An output from the FFT circuit 3 is also supplied to a switch circuit 5 which is controlled by a gate signal from a timing generator 17. The switch circuit 5 passes only a phase reference symbol (hereinafter described as PRS symbol where applicable) of the output from the FFT circuit 3. The PRS symbol is a known fixed symbol which is referred to by the demodulator for the detection of frequency and timing.

A pattern generator 6 generates a carrier in accordance with a conjugate complex number signal of a signal in the frequency range represented by the PRS symbol. The carrier generated by the pattern generator 6 in accordance with the conjugate complex number signal and a carrier received from the PRS symbol are multiplied together by a cross power calculator 7 to obtain a cross power. If the received signal frequency is in tune, the calculation results of the cross power calculator 7 indicate a frequency transfer function of the transmission path at the frequency point where the carrier is present. An output signal of the cross power calculator 7 is inverse Fourier transformed by an inverse fast Fourier transformation circuit (hereinafter described as IFFT circuit) 8. With this inverse Fourier transformation, the IFFT circuit 8 can output a pseudo complex impulse response signal of the transmission path.

The complex impulse response signal output from the IFFT circuit 8 is supplied to a power calculation circuit 9 which performs a square calculation of the input complex impulse response signal to obtain a power signal. The power signal output from the power calculation circuit 9 is supplied to a peak position detector 13 to obtain a peak position of the input power signal, i.e., the peak level of the impulse response signal, which is supplied to a timing control circuit 14.

Upon reception of the peak level from the peak position detector 13, the timing control circuit 14 controls via a D/A converter 15 the oscillation frequency of a voltage controlled crystal oscillator (VCXO) 16 in such a manner that the power signal or the impulse response signal becomes maximum at a target position. With the controlled oscillation signal of VCXO 16, a sampling clock signal of the A/D converter and the gate signal for controlling the switch circuit 5 are controlled.

With such a conventional demodulator, however, a plurality of peaks may appear on an impulse response signal while a plurality of radio waves are received with a single antenna in a single frequency network (hereinafter described as SFN where applicable) environment or in a multipath environment. It is therefore difficult to converge the reception timing into an optimum one by only detecting the peak position, and interference is likely to occur between OFDM symbols.

SUMMARY OF THE INVENTION

It is an object of the present invention to provide a demodulator capable of suppressing interference between symbols when a plurality of radio waves are received with a single antenna in an SFN environment or in a multipath environment.

According to one aspect of the present invention, a demodulator of a receiver for receiving an orthogonal frequency division multiplex modulated signal is provided, which comprises: first calculating means for calculating a transfer function of a transmission path at a frequency point where a carrier is present; second calculating means for calculating an impulse response signal from the transfer function calculated by said first calculating means; detecting means for calculating a sum of levels of the impulse response signal in a substantially and sequentially shifted window nearly equal to a guard interval period to detect a position where a maximum value of the sum is obtained; and control means for controlling a reception timing in accordance with the position of the maximum value detected by said detecting means so as to converge the position of the maximum value into a target position.

In this demodulator, a sum of levels of the impulse response signal is calculated in a substantially and sequentially shifted window nearly equal to a guard interval period, and a reception timing is controlled so that the position of the maximum value of the sum of the impulse response signal converges into a target position. Accordingly, it becomes possible to always set the optimum reception timing without any interference between received symbols if all signals received through transmission paths are generally in the time duration of the guard interval period. With the above control, interference between received symbols can be avoided.

According to another aspect of the present invention, a demodulator of a receiver for receiving an orthogonal frequency division multiplex modulated signal is provided, which comprises: first calculating means for calculating a transfer function of a transmission path at a frequency point where a carrier is present; second calculating means for calculating an impulse response signal from the transfer function calculated by said first calculating means; symbol interference calculating means for calculating a symbol interference of a received symbol in accordance with the impulse response signal calculated by said second calculating means; and control means for controlling a reception timing so as to minimize the symbol interference calculated by said symbol interference calculating means.

In this demodulator, interference between received symbols is calculated in accordance with the impulse response signal, and the reception timing is controlled so as to minimize the symbol interference. Accordingly, interference between received symbols can be always minimized even if all signals received through transmission paths are not in the time duration of the guard interval period.

BRIEF DESCRIPTION OF THE DRAWINGS

Fig. 1 is a block diagram showing the structure of a demodulator according to an embodiment of the present invention.

Fig. 2 is a diagram illustrating the operation of the demodulator according to the embodiment shown in Fig. 1.

Fig. 3 is a block diagram showing the structure of a demodulator according to a modification of the embodiment shown in Fig. 1.

Fig. 4 is a block diagram showing the structure of a conventional demodulator.

DETAILED DESCRIPTION OF THE PREFERRED EMBODIMENTS

Embodiments of a demodulator of this invention will be described with reference to the accompanying drawings.

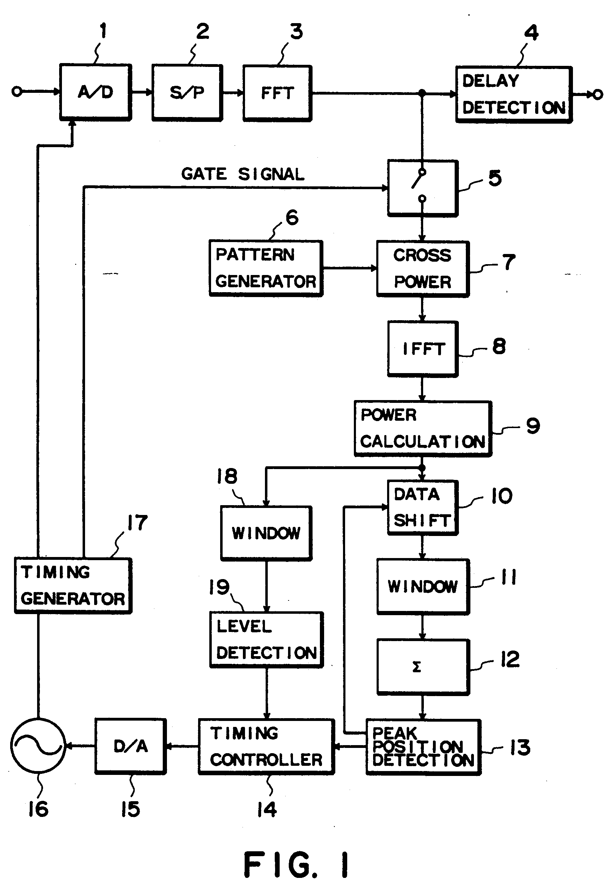

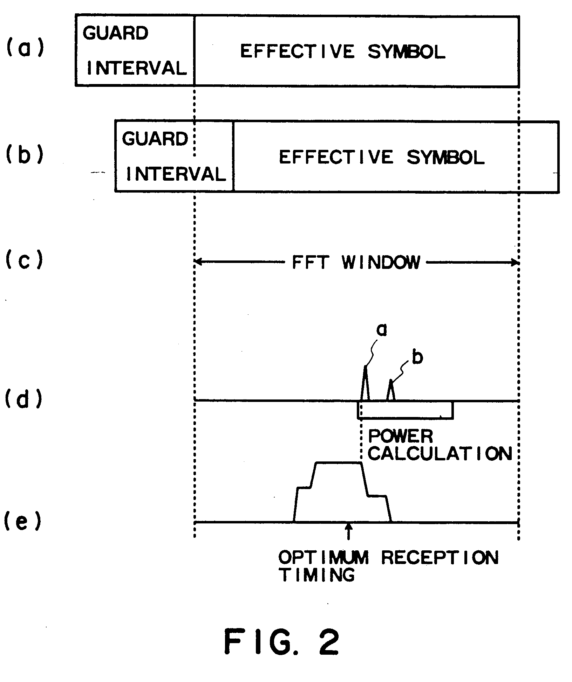

Figs. 1 and 2 are a block diagram showing the structure of a demodulator according to an embodiment of the invention, and a diagram illustrating the operation of the demodulator. The demodulator of this embodiment will be described, taking as an example a receiver for receiving radio waves of digital-audio broadcasting in conformity with European Broadcasting Union.

As shown in Fig. 1, a received intermediate frequency signal which was OFDM modulated is supplied to an input terminal and A/D converted by an A/D converter 1. The A/D converted signal is converted into parallel data by a serial/parallel converter 2. This parallel data is supplied to an FFT circuit 3 whereat it is Fourier transformed to be converted from signals in a time domain into signals in a frequency domain. An output of the FFT circuit 3 is delay-detected by a delay detector 4 and output as a demodulated signal.

An output from the FFT circuit 3 is also supplied to a switch circuit 5 which is controlled by a gate signal from a timing generator 17. The switch circuit 5 passes only a PRS of the output from the FFT circuit 3.

A pattern generator 6 generates a carrier in accordance with a conjugate complex number signal of a signal in the frequency range represented by the PRS symbol. The carrier generated by the pattern generator 6 in accordance with the conjugate complex number signal and a carrier received from the PRS symbol are multiplied together by a cross power calculator 7 to obtain a cross power. The calculation results of the cross power calculator 7 indicate a frequency transfer function of the transmission path at the frequency point where the carrier is present.

The PRS symbol has a known fixed pattern, and the amplitudes of its carriers are constant (because of QPSK modulation). If the phase of the k-th carrier is represented by $\phi k$, the PRS symbol is given by the following equation (1) wherein the number of carriers per one symbol is 1536 and k is not 0.

$$\text{PRS Symbol} = \sum_{k=-768}^{768} 1 \cdot e^{j\phi k} \qquad (1)$$

By representing the frequency transfer function of a transmission path covering from modulation to demodulation as Ck, the received PRS symbol is given by the following equation (2).

$$\text{Received PRS Symbol} = \sum_{k=-768}^{768} C_k \cdot e^{j\phi k} \qquad (2)$$

After the received PRS symbol is Fourier transformed by the FFT circuit 3, each carrier is given by the following equation (3).

$$C_k \cdot e^{j\phi k} \ (-768 \leqq k \leqq 768, k \neq 0) \qquad (3)$$

The pattern generator 6 generates each carrier given by the following equation (5), each carrier being contained in the conjugate complex number signal of the PRS symbol given by the following equation (4).

$$(PRS)^* = \sum_{k=-768}^{768} e^{-j\phi k} \qquad (4)$$

$$(-768 \leq k \leq 768, k \neq 0)$$

$$e^{-j\phi k} \qquad (5)$$

$$(-768 \leq k \leq 768, k \neq 0)$$

The cross power calculator 7 calculates the cross power of the carrier based on the received PRS symbol given by the equation (3) and the carrier given by the equation (5). Therefore, the cross power calculator 7 outputs a signal $C_k$ ($-768 \leq k \leq 768$, k is not 0), and the frequency transfer function at the point where the carrier is present can be known.

An output signal of the cross power calculator 7 is inverse Fourier transformed by an IFFT circuit 8. The frequency transfer function can be obtained by FFT-ing the impulse response signal, and a complex impulse response signal can be obtained by IFFT-ing the frequency transfer function. Therefore, with the inverse Fourier transformation, the IFFT circuit 8 can output a pseudo complex impulse response signal of the transmission path.

The complex impulse response signal output from the IFFT circuit 8 is supplied to a power calculation circuit 9 which performs a square calculation of the input complex impulse response signal to obtain a power signal, i.e., an impulse response signal. The power signal output, i.e., impulse response signal output from the power calculation circuit 9 is supplied to a data shift circuit 10 and a window circuit 18.

Upon reception of the power signal output, i.e., impulse response signal, the data shift circuit 10 shifts the data order of the impulse response signal in accordance with a control signal supplied from a peak position detector 13 to be described later. The shifted impulse response signal is supplied to a window circuit 11 having a time duration nearly equal to a guard interval period.

The impulse response signal having a sequentially shifted data order is picked up during a time period (hereinafter called a guard interval time window) generally equal to a guard interval period, and supplied to an adder 12 which calculates a sum of input impulse response signal levels, i.e., a total power and sends it to the peak position detector 13.

As the data shift circuit 10 shifts each received PRS symbol as many times as the number of IFFT points, the peak position detector 13 detects the position of a peak value of the total power, and sends it to a timing control circuit 14. The timing control circuit 14 controls via a D/A converter 15 the oscillation frequency of a VCXO 16. With the controlled oscillation signal of VCXO 16, a sampling clock signal of the A/D converter 1 to be output from the timing generator 17 and the gate signal for controlling the switch circuit 5 are controlled.

The window circuit 18 picks up only the signal in the time duration during which symbol interference may occur, and sends it to a level detector 19. If data input to the level detector 19 contains data of a predetermined level or higher, the level detector 19 controls the timing controller 14 so that the gain thereof is increased.

In the demodulator of this embodiment, if two radio waves are received after passing through different transmission paths a and b as indicated at (a) and (b) in Fig. 2, the impulse response signal as indicated at (d) in Fig. 2 is picked up during the time duration corresponding to the guard interval time window nearly equal to the guard interval period, and the adder calculates its total power.

As above, as the data of the impulse response signal is shifted by the data shift circuit 10, the adder 12 repeats the addition calculation to obtain the total power in the guard interval time window as indicated at (e) in Fig. 2. An FFT window for Fourier transformation by the FFT circuit 3 is indicated at (c) in Fig. 2.

Upon reception of the addition results, i.e., total power from the adder 12, the peak position detector 13 obtains the peak position of a total power. The timing control circuit 14 controls the oscillation frequency of the D/A converter 15 via VCXO 16 so that the reception timing is adjusted with the peak position being converged into a target position. Therefore, the phase of a sampling clock signal of the A/D converter 1 output from the timing generator 17 is shifted to obtain the target position, i.e., optimum reception timing.

Similarly, as the oscillation frequency of VCXO 16 is controlled, the switch circuit 5 is controlled by the gate signal output from the timing generator 17 to pick up the PRS symbol.

With the above operations, it becomes possible to always set the optimum reception timing without any symbol interference if all signals received through transmission paths are in the time duration of the guard interval period.

The window circuit 18 picks up the power of the impulse response signal corresponding only to the signal received from the transmission path during the period symbol interference may occur, and if the power has a predetermined level or higher, it is detected by the level detector 19. In accordance with the output from the level detector 19, the gain of the timing controller 14 is increased to improve the response characteristics of reception timing control. Accordingly, the tracking characteristics against abrupt changes in all transmission paths can be improved, and stability in a steady state is ensured.

The time length of the guard interval time window is set generally equal to the guard interval period, because it is determined based upon the period during which reproduced sounds may be affected by multipath or the like. The time length of the guard interval time window of the window circuit 11 may be changed in accordance with the response characteristics of reception timing control and some allowance of the change in transmission paths.

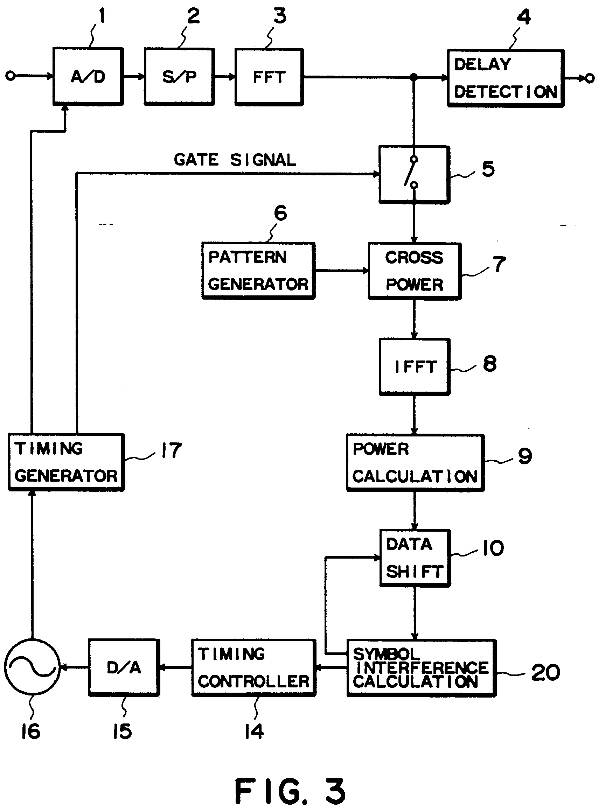

Next, a modification of the demodulator of the above embodiment will be described. Fig. 3 is a block diagram showing the structure of a modification of the demodulator of the above embodiment.

In the modification shown in Fig. 3, the window circuits 11 and 18, adder 12, peak position detector 13 and level detector 19 of the above embodiment are omitted. The data of an impulse response signal is shifted by the data shift circuit 10, the shifted output signal is supplied to a symbol interference calculator 20 to calculate symbol interference.

The symbol interference calculator 20 calculates a total interference level in accordance with the power level of all signals received from transmission paths on which symbol interference may occur, i.e., in accordance with a shift between the level and timing of an OFDM symbol. This calculation is repeated while the data shift circuit 10 shifts the data of the impulse response signal. The oscillation frequency of VCXO 16 is controlled by the timing controller 14 to make the interference level lowest.

Therefore, the phase of the sampling clock signal of the A/D converter 1 output from the timing generator 17 which is controlled by the oscillation frequency of VCXO 16 can be controlled, and the reception timing is controlled to make symbol interference lowest in any reception environment including such a case wherein signals received from transmission paths are not in the time period of the guard interval.

Also in the modification shown in Fig. 3, the window circuit 18 and level detector 19 of the demodulator of the embodiment shown in Fig. 1 may be used to increase the gain of the timing controller 14 during symbol interference.

As described above, the demodulator of this invention can receive radio waves at a timing with less symbol interference when a plurality of radio waves are received with a single antenna in an SFN environment or in a multipath environment.

## Claims

1. A demodulator of a receiver for receiving an orthogonal frequency division multiplex modulated signal, comprising:

   first calculating means for calculating a transfer function of a transmission path at a frequency point where a carrier is present;

   second calculating means for calculating an impulse response signal from the transfer function calculated by said first calculating means;

   detecting means for calculating a sum of levels of the impulse response signal in a substantially and sequentially shifted window nearly equal to a guard interval period to detect a position where a maximum value of the sum is obtained; and

   control means for controlling a reception timing in accordance with the position of the maximum value detected by said detecting means so as to converge the position of the maximum value into a target position.

2. A demodulator of a receiver for receiving an orthogonal frequency division multiplex modulated signal, comprising:

   first calculating means for calculating a transfer function of a transmission path at a frequency point where a carrier is present;

   second calculating means for calculating an impulse response signal from the transfer function calculated by said first calculating means;

   symbol interference calculating means for calculating a symbol interference of a received symbol in accordance with the impulse response signal calculated by said second calculating means; and

   control means for controlling a reception timing so as to minimize the symbol interference calculated by said symbol interference calculating means.

3. A demodulator according to claim 1 or 2, further comprising response characteristic control means for changing the response characteristics of reception timing control by detecting that the level of the impulse response signal at a timing when symbol interference occurs is in excess of a predetermined value.

FIG. 1

(a) | GUARD INTERVAL | EFFECTIVE SYMBOL |

(b) | GUARD INTERVAL | EFFECTIVE SYMBOL |

(c) ← FFT WINDOW →

(d)

a

b

POWER CALCULATION

(e)

↑ OPTIMUM RECEPTION TIMING

# FIG. 2

FIG. 3

EP 0 841 787 A2

FIG. 4

9